# EUROPEAN PATENT SPECIFICATION

(11) **EP 1 724 397 B1**
(45) Date of publication and mention of the grant of the patent: **17.12.2008**
(21) Application number: 06114216.2
(22) Date of filing: 19.05.2006
(51) Int. Cl.: E01B 35/02

(54) **METHOD AND DEVICE FOR MEASURING RAILWAY LINE PARAMETERS**
VERFAHREN UND VORRICHTUNG UM SCHIENENWEGPARAMETERN ZU MESSEN
Dispositif et procédé pour mesurer des paramètres d'une voie ferrée

(30) Priority: 19.05.2005 IT MI20050914
(43) Date of publication of application: 22.11.2006
(73) Proprietor: Balfour Beatty Rail S.P.A., 20141 Milano (IT)
(72) Inventor: TAVERNA, Enzo, 27058, VOGHERA (IT); ORGERA, Augusto, 04020, SPIGNO SATURNIA (IT); PALUDI, Sandro, 66020, SAMBUCETO (IT); GAMBA, Gianfranco, 24121, BERGAMO (IT)
(74) Representative: Gervasi, Gemma

(56) References cited:
- EP-A- 1 039 034
- DE-B- 1 262 023
- FR-A- 2 696 543
- US-A- 4 691 565
- US-A- 5 025 566
- US-A- 5 930 904

## Description

The present invention relates to a method and device for measuring railway line parameters and, more precisely, a method and a template for measuring and storing railway line parameters with the purpose of supplying such parameters to further railway line measuring devices.

One example of known measuring device for railways is shown in US 4,691,565. The US prior art document discloses a mobile machine comprising a satellite bogie preceding the measuring machine and communicating by means of laser beam, the machine being suitable to move on a railway in order to measure vertical and lateral position of the track. In such a way, the deviations of the track position determined by the measuring machine can be established and correction effected accordingly.

Onother example of measuring device for railways is disclosed in US 5,025,566. The prior art patent describes a foldable measuring device provided with an electronic level meter and a gage, the device being able to measure only these two parameters.

It is known that in the construction of a railway line, activities such as installation of cross arm supporting posts, assembly of such posts, tensioning of the carrying cable and tensioning of the contact wire are envisaged after laying the rails. Furthermore, also the tracks rails must be maintained at a predetermined reciprocal distance within equally predetermined tolerances.

Furthermore, it is known that in order to obtain correct operation of the train pantograph, the wire or contact wires must be at a predetermined distance from the "track level" within the envisaged tolerance limits and that a correct "transversing" of such wire or wires is required.

A device for measuring the aforesaid line parameters affecting said operations is therefore needed, both for initial surveying during railway line construction and for periodical in-service inspections.

It is the object of the present invention to provide a device for easily and reliably measuring and subsequently storing the aforesaid railway line parameters, as well as a reliable method for measuring said parameters by means of said device.

Another object of the present invention to provide a device for measuring railway line parameters which is reliable, easy to use and, above all, streamline and robust.

The object of the invention is therefore a railway line parameter measuring device according to claim 1.

Furthermore, the object of the invention is a measuring method of said railway line parameters according to claim 7.

The device of the present invention has the following main advantages. The first advantage is in that, after measuring such parameters, the devices needed for installing the cross arms and the line wires within the accepted tolerance limits can be calibrated and arranged.

Another advantage resides in that the device allows to measure the aforesaid parameters in periodical in-service inspections.

A detailed description of a preferred embodiment of the device of the present invention will now be provided, by the way of non-limitative example, with reference to the accompanying drawings, wherein:
figure 1 is a schematic view of a railway line;
figure 2 is a perspective view showing the measuring device of the present invention;
figure 3 is a detailed view of a part of the measuring device in figure 2;
figure 4A is a schematic elevated view showing the measuring device in the operative condition on the railway line;
figure 4B is a top plan view of the measuring device in the condition of figure 4A; and
figure 5 is a magnified view of the measuring device in the condition of figure 4A.

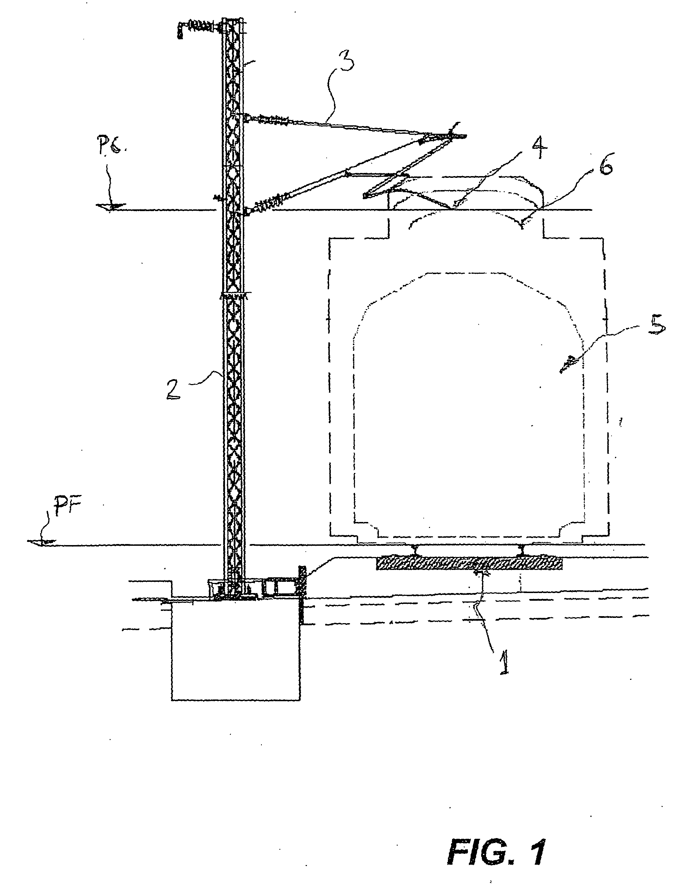

Referring now to Figure 1, is schematically shown a railway line. Typically, a railway line comprises one or more tracks 1, several supporting posts 2, each of which presents a cross arm 3 for one or more carrying cables and one or more electrical contact wires 4.

The plane on which the contact wire 4 lays is called "contact level" PC, while the plane on which the tracks 1 lays is called "track level" PF. Furthermore, the dotted line outlines the overall dimensions of a locomotive 5 provided with pantograph 6, the latter installed on the upper part of the locomotive and having the function of taking electrical energy from the service line via electrical contact with the contact wire 4.

It is worth reminding that the arrangement of all the aforesaid components is predetermined by a specific standard, which determines the tolerance ranges of the parameters within which each component listed above must be with respect to the other components, both in terms of relative position and in terms of operation, namely:
- gauge and axis of track 1;
- distance between the face of post 2 and the inner profile of the rail on post side of track 1;
- distance between each post 2;
- distance of contact wire 4 from "track level"; and possibly
- the "transversing" of the contact wire 4.

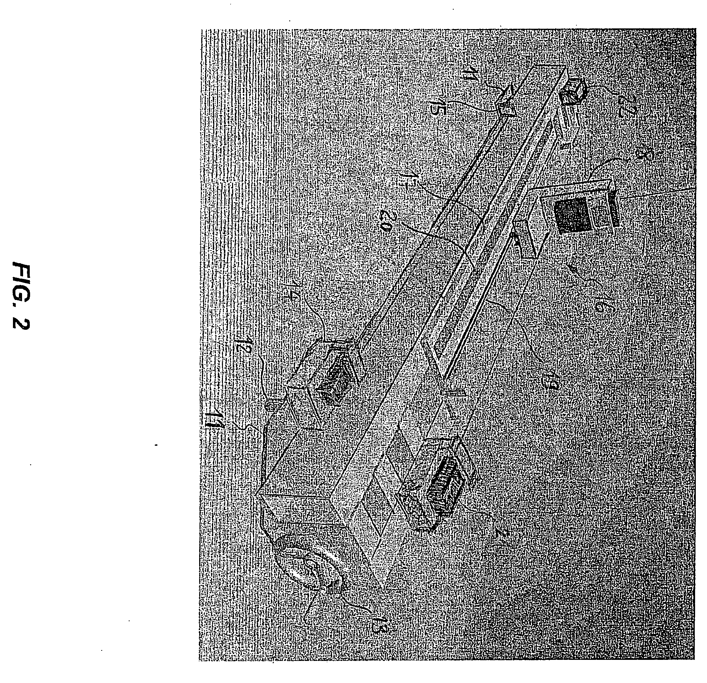

Figure 2 shows a perspective view of the railway line parameter measuring device of the present invention.

More precisely, the device comprises a main body 10 which is boxed and essentially shaped as an elongated parallelepiped. A supporting plate 11 is slidingly mounted on a first end of the main body 10, the plate presenting a pair of protruding reference members such as locator pins 12. Each locator pin 12 is placed to abuttingly make contact with the surface contained on the inner plane of a rail of a track 1 (shown more in detail below).

Similarly, at the opposite end of the main body 10, a second sliding plate 11 fitting at least one locator pin 12 for contact on the track 1 is envisaged. The second plate 11 also slides with respect to the main body 10. Both plates 11 can be actuated by a handwheel 13 (one for each plate 11, of which only one is shown in the figure) rotationally mounted on the end of the main body 10.

The assembly formed by the plates 11 and the respective handwheels 13 is connected to a single worm screw or rack crossing through the main body 10 and integrally joining the two handwheels 13 so as to synchronise the displacement of the plates 11 reciprocally away or towards each other.

Furthermore, on a plate 11 is fixedly mounted a first telemetry device which comprises a light ray telemeter 14, while on the opposite plate 11 is rotationally mounted a light ray reference plaque 15. The plaque 15 according to its position either intercepts or lets through the light ray from the telemetry device 14 (this will be explained in better detail below).

On the other hand, a second telemetry device 16 is present at the upper part of the main body 10. The second telemetry device 16 is slidingly mounted on a plate 17, the latter integral with the main body 10. More precisely, the second telemetry device 16 is mounted on a supporting bracket 18 which is slidingly engaged by a guide 19 integral with the plate 17. Furthermore, the plate 17 comprises a graduated ruler 20 parallel to the guide 19.

Furthermore, again on the upper part of the main body 10 is mounted a third telemetry device 21 arranged so as to measure with its ray the exact position of the bracket 18, and therefore of the second telemetry device 16, with respect to the main body 10 (illustrated in better detail below).

Additionally, again on the upper part of the main body 10 is mounted a device 22 for measuring the horizontality, i.e. the inclination/angle, of the main body 10 with respect to the vertical and horizontal plane itself.

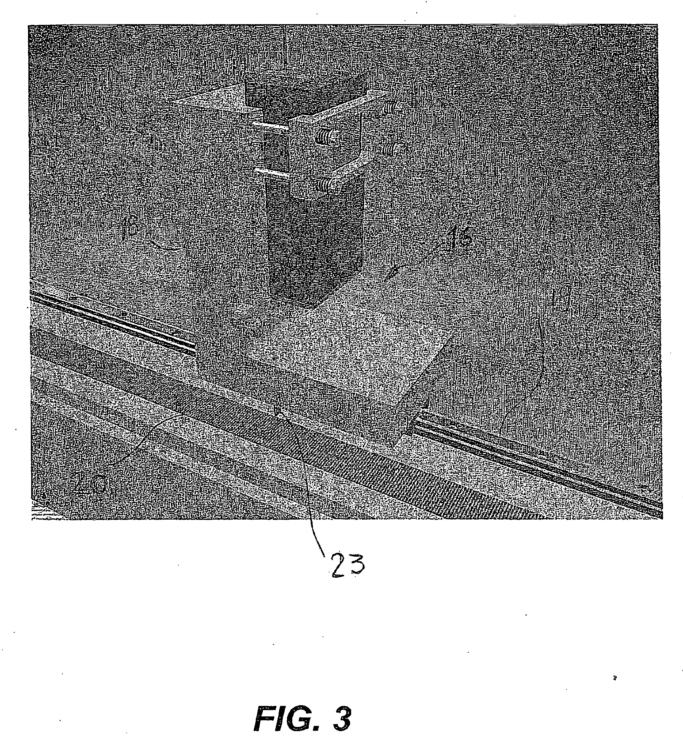

With particular reference to figure 3, bracket 18 presents an indicator integral with the latter which cooperates with the graduated scale of the ruler 20 during the displacement of the bracket 18, indicating on the graduated scale the relative position (illustrated in better detail below).

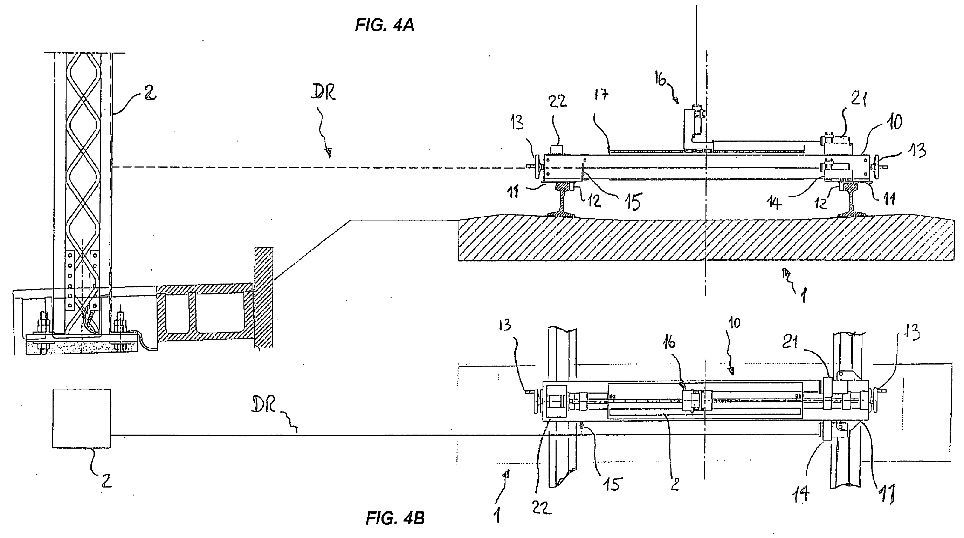

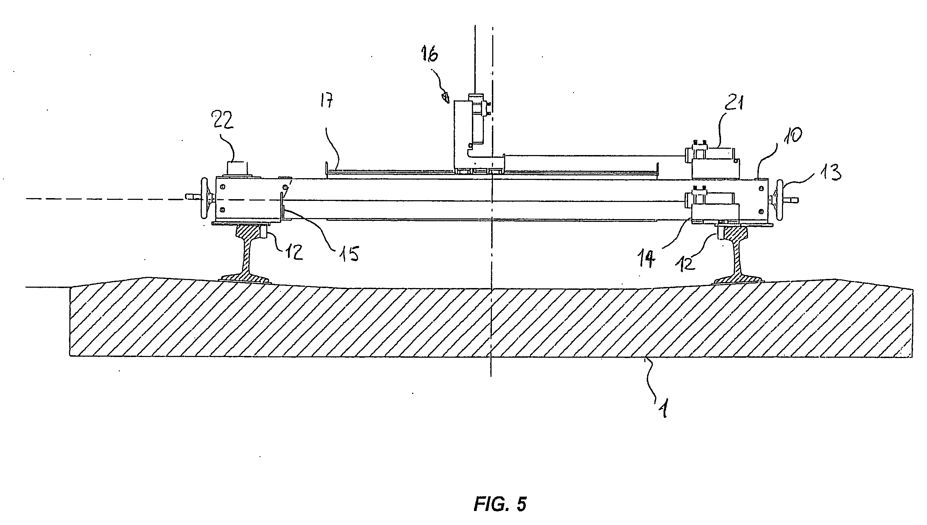

The measuring method of the railway line parameters with the measuring device of the present invention will now be illustrated with reference to figures 4A, 4B and 5.

According to the invention, in order to measure the railway parameters the device 10 is firstly positioned on the rails of the track 1 to be measured.

The handwheels 13 are then turned and, being mechanically connected, make both plates 11 synchronously move in/out. In this way, the locator pins 12 of the device come into contact with the inner plane of the track 1. Furthermore, by moving together, the locator pins 12 maintain the measuring device always centred with respect to the track 1, regardless of the gauge of the track 1 itself.

In this condition, the device for measuring the inclination/angle 22 on the main body 10 allows to measure the transversal inclination/angle of track 1. As explained in better detail below, such value in addition to being a value to be measured is also crucial for calculating the so-called "DR", i.e. the distance between the track and the supporting post 2 of the electrical wire 4.

The first laser ray telemetry device 14 is mounted on plate 11 which in turn moves the locator pins 12. Therefore, once the pins 12 are tightened so as to stably position the device 10 according to the present invention on the track 1, the rotational plate 15 on which the other mobile plate 11 is mounted is turned.

In this condition, the light ray from the telemetry device 14 is intercepted by the rotational plate 15 and "measures" the distance between the two plates 11. Such measurement, given a constant which depends on the exact assembly point, allows to know the gauge of the track 1.

Therefore, after measuring the gauge of the track 1, the plate 15 is turned again so that the light ray from the telemetry device 14 intercepts the post 2, thus measuring the distance between pin 12 and face of the post 2.

The measured gauge must be subtracted from such value and the result is multiplied by the cosine of the angle measured by the device 22. The product of such trigonometric operation is the "DR" measure, i.e. the distance between the track 1 and the post 2.

The telemetry device 16 is then positioned so that the red spot of the light ray appears on the centre line of the contact wire 4. Such reading indicates the height of the wire 4 from the track level PF.

Furthermore, the position of the bracket 18 carrying the device 16 is measured by means of the ray from the telemetry device 21 by maintaining stationary the ray on the wire 4 related to the device 16.

Such measurement, again given a constant, indicates the transversing of the wire 4.

It is important to specify that the management and control of all the devices indicated above, such as the telemetry devices 14, 16 and 21, the inclination/angle measuring device 22 and the other accessory parts may be integrated with a data recorder unit (e.g., a PLC or similar) and all values may thus be stored automatically and transferred to a PC or similar.

Furthermore, the reading of the aforesaid line parameters may be subsequently stored in a digital archive or via an appropriate data processing unit, for the purpose of generating a database of measured data/parameters with which it is possible to:
- calibrate possible measuring apparatuses;
- form a measured data/parameter archive resulting from periodical in-service inspections.

## Claims

1. A railway line parameter measuring device (10), said railway line comprising two or more rails (1) on a track level (PF), and a plurality of supporting posts (2) for electrical contact wires (4) on a contact level (PC),
the device comprising:
- a main elongated body (10);
- fastening means (11,12,13) of said main body (10) onto said rail (1);
- first measuring means (14,15) integrally mounted on said fastening means (11) so to follow the displacement of the latter with respect to said main body (10) in a direction which is substantially parallel to the longitudinal direction of said main body (10)
**characterized in that** the first measuring means are telemetry means, and **in that** the device further comprises second telemetry means (16)
, wherein said first telemetry means comprises a plate (15) mounted at a second end of said main body (10) in a pivoting manner, the arrangement being such that said plate (15) is movable from a first condition, wherein it intercepts the light ray coming from-said telemetry device (14), and a second condition where the plate (15) is turned with respect to said main body (10) and does not intercept the light ray coming from said telemetry device (14), and **in that** said second telemetry means (16) comprises a supporting plate (17) fixedly mounted onto said main body (10) and having a guide (19), and a light ray telemeter (16) having an oriented direction which is substantially orthogonal with respect to the longitudinal direction of said main body (10) and mounted on a supporting bracket (18) of said telemeter (16), said supporting bracket (18) co-operating with said guide (19) so as to support said telemeter (16) in a sliding manner with respect to said main body (10).

2. A railway line parameter measuring device (10) according to claim 1, wherein said main body (10) is made of one or more box members.

3. A railway line parameter measuring device (10) according to claim 1 or 2, wherein said fastening means comprises:
- at least one plate (11) mounted onto said main body (10) in a sliding manner and at a first end thereof;
- at least one stop member (12) integrally mounted onto said plate (11) and for co-operating in an abutting manner with a predetermined surface point on a rail (1) of said track; and
at least one actuating member (13) for displacing said at least one plate (11) with respect to said main body (10).

4. A railway line parameter measuring device (10) according to one or-more of the preceding claims, wherein said plate (17) also comprises a graduated ruler (20) arranged in a parallel manner to said guide (19), and an indicator (23) integral with said bracket (18) for co-operating with said graduated ruler (20).

5. A railway line parameter measuring device (10) according to any of the preceding claims, further comprising a third telemetry means (21) arranged integrally with said main body (10) and for the measuring of the displacement of said second telemetry means (16) with respect to the longitudinal direction of said main body (10).

6. A railway line parameter measuring device (10) according to any of the preceding claims, further comprising means (22) for measuring the inclination/angle of the-main body (10) with respect to the gravitational vertical direction.

7. A railway line parameter measuring method, said railway-line comprising two or more rails (1) on a track level (PF), and a plurality of supporting posts (2) for electrical contact wires (4) on a contact level (PC),
the method being **characterised in that** it comprises the following steps:
- arranging onto a rail of a railway track (1) a measuring device (10) according to the preceding claims;
- fastening said measuring device (10) to said track (1) by abutting said fastening means (11,12,13) onto the inner surface of each rail of said track (1);
- measuring the gauge of the track (1) by measuring the displacement of said fastening means (11, 12, 13) with respect to the main body (10) by means of the first telemetry means (14), said displacement being the gauge value of said track (1);
- measuring the distance between said first fastening means (11, 12) and said supporting post (2) by means of said first telemetry means (14);
- obtaining the distance (DR) between track (1) and supporting post (2) by subtracting from said measured distance value between said first fastening means (12) and the supporting post (2) the measured gauge value;
- measuring the height (PC) of the electrical wire (4) with respect to the track level (PF) by optical identification of the electrical wire (4) by means of second telemetry means (16) slidingly arranged on said main body (10); and
- measuring the transversing of said electrical wire (4) with respect to said track by measuring the relative position of said second telemetry means (16) during the aforesaid optical identification step, with respect to a median point of said main body (10) and by means of a third telemetry means (21) integrally mounted onto said main body (10).

8. A railway line parameter measuring method according to the preceding claim, comprising a further step of measuring the inclination/angle of said main body (10) with respect to the gravitational vertical direction by means of inclination/angle measuring means (22) integrally mounted on said main body (10).

9. A railway line parameter measuring method according to claim 8 or 9, comprising a further step of storing and digitally processing the parameters measured during the preceding steps by means of a digital data processing unit.

## Patentansprüche

1. Bahnlinienparametermesseinrichtung (10), wobei die Bahnlinie zwei oder mehr Gleise (1) auf einem Streckenniveau (PF) und eine Vielzahl von Unterstützungspfosten (2) für elektrische Kontaktdrähte (4) auf einem Kontaktniveau (PC) umfasst,
die Einrichtung umfasst:
- einen länglichen Hauptkörper (10);
- Befestigungsmittel (11, 12, 13) des Hauptkörpers (10) zum Befestigen auf dem Gleis;
- Messmittel (14, 15), die integral an dem Befestigungsmittel (11) angebracht sind, so dass sie dessen Verschiebung in Bezug auf den Hauptkörper (10) in einer Richtung folgen, die im Wesentlichen parallel zur Längsrichtung des Hauptkörpers (10) ist;
**dadurch gekennzeichnet, dass**
die ersten Messmittel Telemetriemittel sind, und dass die Einrichtung ferner zweite Telemetriemittel (16) umfasst, wobei die ersten Telemetriemittel eine Platte (15) umfassen, die an einem zweiten Ende des Hauptkörpers (10) in einer schwenkbaren Weise angebracht sind, wobei die Anordnung derart ausgestaltet ist, dass die Platte (15) aus einem ersten Zustand, bei der sie den Lichtstrahl unterbricht, der aus der Telemetrieeinrichtung (14) kommt, in einen zweiten Zustand bewegbar ist, in dem die Platte (15) in Bezug auf den Hauptkörper (10) gedreht ist und den Lichtstrahl nicht unterbricht, der aus der Telemetrieeinrichtung (14) kommt, und wobei die zweiten Telemetriemittel (16) eine Unterstützungsplatte (17), die fest an dem Hauptkörper (10) angebracht ist und eine Führung (19) aufweist, und einen Lichtsrahltelemeter (16) umfassen, der eine Ausrichtung aufweist, die im Wesentlichen orthogonal in Bezug auf die Längsrichtung des Hauptkörpers (10) ist, und der an einem Unterstützungsausleger (18) des Telemeters (16) angebracht ist, wobei der Unterstützungsausleger (18) mit der Führung (19) derart kooperiert, dass der Telemeter (16) in einer gleitenden Weise in Bezug auf den Hauptkörper (10) gestützt wird.

2. Bahnlinienparametermesseinrichtung (10) nach Anspruch 1, bei der der Hauptkörper (10) aus einem oder mehreren Behälterelementen besteht.

3. Bahnlinienparametermesseinrichtung (10) nach Anspruch 1 oder 2, bei der die Befestigungsmittel ferner umfassen:
- zumindest eine Platte (11), die in einer gleitenden Weise an dem Hauptkörper (10) und an dem seinem ersten Ende angebracht ist;
- zumindest ein Halteelement (12), das integral auf der Platte (11) angebracht ist, zum Kooperieren in einer anstoßenden Weise mit einem vorbestimmten Oberflächenpunkt an dem Gleis (1) der Strecke; und
- zumindest ein Auslöseelement (13) zum Verschieben der zumindest einen Platte (11) in Beug mit dem Hauptkörper (10).

4. Bahnlinienparametermesseinrichtung (10) nach einem der vorhergehenden Ansprüche, bei der die Platte (17) ebenfalls einen abgestuften Regler (20), der in einer parallelen Weise zur Führung (19) angeordnet ist, und einen mit dem Ausleger (18) integralen Anzeiger (23) zum Kooperieren mit dem abgestuften Regler (20) umfasst.

5. Bahnlinienparametermesseinrichtung (10) nach einem der vorhergehenden Ansprüche, die ferner dritte Telemetriemittel (21) umfasst, die integral mit dem Hauptkörper (10) angeordnet sind, und die zum Messen der Verschiebung der zweiten Telemetriemittel (16) in Bezug auf die Längsrichtung des Hauptkörpers vorgesehen sind.

6. Bahnlinienparametermesseinrichtung (10) nach einem oder mehreren der vorhergehenden Ansprüche, die ferner Mittel zum Messen der Neigung/des Winkels des Hauptkörpers (10) in Bezug auf die vertikale Gravitationsrichtung umfasst.

7. Bahnlinienparametermessverfahren, wobei die Bahnlinie zwei oder mehr Gleise (1) auf einem Streckenniveau (PF) und eine Vielzahl von Unterstützungspfosten (2) für elektrische Kontaktdrähte (4) auf einem Kontaktniveau (PC) umfasst,
das Verfahren ist **dadurch gekennzeichnet, dass** es die folgenden Schritte umfasst:
- Anordnen einer Messeinrichtung (10) nach einem der vorhergehenden Ansprüche auf einer Bahnstrecke (1);
- Befestigen der Messeinrichtung (10) an der Strecke (1) durch Anstoßen der Befestigungsmittel (11, 12, 13) an der inneren Oberfläche von jedem Gleis der Strecke (1);
- Ausmessen jeder Messstelle der Strecke (1) durch Messen der Verschiebung der Befestigungsmittel (11, 12, 13) in Bezug auf den Hauptkörper (10) mittels der ersten Telemetriemittel (14), wobei die Verschiebung der Messstellenwert der Strecke (1) ist;
- Messen der Entfernung zwischen den ersten Befestigungsmitteln (11, 12) und dem Unterstützungspfosten (2) mittels der ersten Telemetriemittel (14);
- Erhalten der Entfernung (DR) zwischen der Strecke (1) und dem Unterstützungspfosten (2) durch Abziehen des gemessenen Messstellenwerts von der gemessenen Entfernung zwischen den ersten Befestigungsmitteln (12) und dem Unterstützungspfosten (2);
- Messen der Höhe (PC) der elektrischen Drähte (4) in Bezug auf das Streckenniveau (PF) durch optische Identifikation des elektrischen Drahts (4) mittels der zweiten Telemetriemittel (16), die gleitend an dem Hauptkörper (10) angeordnet sind; und
- Messen des Querlaufs der elektrischen Drähte (4) in Bezug auf die Strecke durch Messen der Relativposition der zweiten Telemetriemittel (16) während des vorhergenannten optischen Identifikationsschritts, in Bezug auf einen Mittenpunkt des Hauptkörpers (10) und mittels dritter Telemetriemittel (21), die integral auf dem Hauptkörper (10) angebracht sind.

8. Bahnlinienparametermessverfahren nach dem vorhergehenden Anspruch, den weiteren Schritt des Messens der Neigung/des Winkels des Hauptkörpers (10) in Bezug auf die vertikale Gravitationsrichtung mittels Neigungs-/Winkelmessmittel (22), die auf dem Hauptkörper (10) angebracht sind, umfassend.

9. Bahnlinienparametermessverfahren nach Anspruch 8 oder 9, den weiteren Schritt des Speicherns und des digitalen Verarbeitens mittels einer digitalen Datenverarbeitungseinheit des während der vorhergehenden Schritte gemessenen Parameters umfassend.

## Revendications

1. Dispositif (10) pour mesurer des paramètres d'une ligne de chemin de fer, ladite ligne de chemin de fer comprenant deux ou plusieurs rails (1) sur un niveau de voie ferrée (PF) et une pluralité de montants de support (2) pour des fils de contact électriques (4) sur un niveau de contact (PC),
le dispositif comprenant:
- un corps principal oblong (10);
- des moyens de fixation (11, 12, 13) dudit corps principal (10) sur ledit rail (1);
- des premiers moyens de mesure (14, 15) montés intégralement sur lesdits moyens de fixation (11) de manière à suivre le déplacement de ceux-ci par rapport audit corps principal (10) dans une direction qui est sensiblement parallèle à la direction longitudinale dudit corps principal (10),
**caractérisé en ce que** les premiers moyens de mesure sont des moyens de télémesure, et **en ce que** le dispositif comprend en outre des deuxièmes moyens de télémesure (16),
où ledit premier moyen de télémesure comprend une plaque (15) montée à une seconde extrémité dudit corps principal (10) d'une manière pivotante, l'agencement étant tel que ladite plaque (15) est déplaçable d'une première condition où elle intercepte les rayons de lumière provenant dudit dispositif de télémesure (14), et une deuxième condition dans laquelle la plaque (15) est tournée par rapport audit corps principal (10) et n'intercepte pas les rayons de lumière provenant dudit dispositif de télémesure (14), et **en ce que** ledit deuxième moyen de télémesure (16) comprend une plaque de support (17) montée fixement sur ledit corps principal (10) et ayant un guide (19), et un télémètre de rayon de lumière (16) ayant une direction orientée qui est sensiblement orthogonale par rapport à la direction longitudinale dudit corps principal (10) et monté sur une fixation de support (18) dudit télémètre (16), ladite fixation de support (18) coopérant avec ledit guide (19) de manière à supporter ledit télémètre (16) d'une manière coulissante par rapport audit corps principal (10).

2. Dispositif (10) pour mesurer des paramètres d'une ligne de voie ferrée selon la revendication 1, où ledit corps principal (10) est réalisé par un ou plusieurs éléments de boîte.

3. Dispositif (10) pour mesurer des paramètres d'une ligne de voie ferrée selon la revendication 1 ou 2, où ledit moyen de fixation comprend:
- au moins une plaque (11) montée sur ledit corps principal (10) d'une manière coulissante et à une première extrémité de celui-ci;
- au moins un élément d'arrêt (12) monté intégralement sur ladite plaque (11) et pour coopérer d'une manière en butée avec un point de surface prédéterminé sur un rail (1) de ladite voie; et
- au moins un élément d'actionnement (13) pour déplacer au moins une plaque précitée (11) par rapport audit corps principal (10).

4. Dispositif (10) pour mesurer des paramètres d'une ligne de voie ferrée selon l'une ou plusieurs des revendications précédentes, où ladite plaque (17) comprend également une règle graduée (20) agencée d'une manière parallèle audit guide (19), et un indicateur (23) intégral avec ledit support (18) pour la coopération avec ladite règle graduée (20).

5. Dispositif (10) pour mesurer des paramètres d'une ligne de voie ferrée selon l'une quelconque des revendications précédentes, comprenant en outre un troisième élément de télémesure (21) agencé intégralement avec ledit corps principal (10) et pour mesurer le déplacement dudit deuxième moyen de télémesure (16) par rapport à la direction longitudinale dudit corps principal (10).

6. Dispositif (10) pour mesurer des paramètres d'une ligne de voie ferrée selon l'une quelconque des revendications précédentes, comprenant en outre des moyens (22) pour mesurer l'inclinaison/angle du corps principal (10) par rapport à la direction verticale de gravitation.

7. Procédé pour mesurer des paramètres d'une ligne de voie ferrée, ladite ligne de voie ferrée comprenant deux ou plusieurs rails (1) sur un niveau de voie ferrée (PF) et une pluralité de montants de support (2) pour des fils de contact électrique (4) sur un niveau de contact (PC),
le procédé étant **caractérisé en ce qu'**il comprend les étapes suivantes:
- agencer sur un rail d'une voie ferrée (1) un dispositif de mesure (10) selon les revendications précédentes;
- fixer ledit dispositif de mesure (10) sur ladite voie (1) en butant contre lesdits moyens de fixation (11, 12, 13) sur la surface intérieure de chaque rail de ladite voie (1);
- mesurer la gauge de la voie (1) en mesurant le déplacement desdits moyens de fixation (11, 12, 13) par rapport au corps principal (10) au moyen du premier moyen de télémesure (14), ledit déplacement étant la valeur de gauge de ladite voie (1);
- mesurer la distance entre lesdits premiers moyens de fixation (11, 12) et ledit montant de support (2) au moyen dudit premier moyen de télémesure (14);
- obtenir la distance (DR) entre la voie (1) et le montant de support (2) par une soustraction de ladite valeur de distance mesurée entre ledit premier moyen de fixation (12) et le montant de support (2) de la valeur de gauge mesurée;
- mesurer la hauteur (PC) du fil électrique (4) par rapport au niveau de voie (PF) par une identification optique du fil électrique (4) au moyen du deuxième moyen de télémesure (16) agencé d'une manière coulissante sur ledit corps principal (10); et
- mesurer le mouvement transversal dudit fil électrique (4) par rapport à ladite voie en mesurant la position relative dudit deuxième moyen de télémesure (16) pendant l'étape d'identification optique précitée, par rapport à un point médian dudit corps principal (10) et au moyen d'un troisième moyen de télémesure (21) monté intégralement sur ledit corps principal (10).

8. Procédé pour mesurer des paramètres d'une ligne de voie ferrée selon la revendication précédente, comprenant une autre étape consistant à mesurer l'inclinaison/angle dudit corps principal (10) par rapport à la direction verticale de gravitation au moyen du moyen de mesure d'inclinaison/angle (22) monté intégralement sur ledit corps principal (10).

9. Procédé pour mesurer des paramètres d'une ligne de voie ferrée selon la revendication 8 ou 9, comprenant une autre étape consistant à stocker et à traiter de manière numérique les paramètres mesurés pendant les étapes précédentes au moyen d'une unité de traitement de données numériques.
